# EUROPEAN PATENT APPLICATION

(11) **EP 2 249 231 A1**
(43) Date of publication of application: **10.11.2010**
(21) Application number: 10007614.0
(22) Date of filing: 30.01.2009
(51) Int. Cl.: G06F 3/023

(54) **Input device**

(30) Priority: 30.01.2008 GB 0801626
(62) Divisional of application: 09704975.3
(71) Applicant: Lancaster University Business Enterprises Limited, Lancaster LA1 4YR (GB)
(72) Inventor: The designation of the inventor has not yet been filed
(74) Representative: Kenrick, Mark Lloyd

(57) **Abstract**

An input device comprising a plurality of physically actuable members. The input device provides a display portion arranged to display a contiguous image. A first part of the display portion is defined by surfaces of the physically actuable members, and a second part of the display portion is defined by portions of the input device other than the physically actuable members.

## Description

The present invention relates to methods for displaying graphical user interface elements to a user and to methods for receiving user input.

The use of computers is widespread both for business and leisure applications. Given the ubiquity of computers, many people now spend large quantities of time interacting with computers. As such it is important that efficient and effective mechanisms for such interaction are provided. Many computers provide a plurality of input devices which users can use to achieve required interaction. Such input devices include keyboards and mice.

Keyboards generally have a plurality of depressible keys arranged in a fixed layout, such as the "QWERTY" layout, with each key having a respective symbol or symbols printed on its surface. For example, keyboards generally comprise a plurality of letter keys, used for inputting text, along with other keys such as numerical keys and function keys.

In many cases, a user interacts with programs running on a computer using a keyboard of the type described above and a pointing device, often a mouse. A standard mode of operation is to input text using a keyboard, while using the mouse to select items on a screen, for example icons and menu items. Whilst this provides an intuitive and easy way of interacting with programs, repeatedly changing between a mouse and a keyboard generally reduces the efficiency of interaction with computer programs.

Some computer programs offer built in keyboard shortcuts to perform particular operations. For example, many programs allow highlighted text to be copied to a clipboard by pressing the keys 'Ctrl + C'. It is also known for more experienced users to create additional keyboard shortcuts by assigning particular functionality to particular key combinations, thereby allowing greater customization of user interaction with programs running on a computer. Many games for example allow a user to remap keys on a keyboard so as to cause those keys to perform specific operations in the game. Such remapping of keys and the use of shortcuts can help increase the efficiency of interaction with computer programs as a user does not have to repeatedly switch between a mouse and a keyboard.

While shortcuts and key remapping offer increased efficiency, users often have difficulty remembering the various combinations of keys which are used to provide different functions. This is particularly acute because many programs each use their own keyboard shortcuts. A user who is used to working with a particular program and the shortcuts provided by that program may therefore have difficulty in adapting to another program which does not provide the same shortcuts.

Remembering the particular functions of each key or combination of keys is made more problematic given that on standard keyboards the symbols displayed on the keys do not change to reflect the operation that the key performs within specific programs. The fixed nature of symbols displayed on keys also creates problems where a user is conditioned to use one particular keyboard layout, for example QWERTY (which is common in some geographical regions), but is then required to use a different keyboard layout, for example AZERTY (which is common in other geographical regions).

Touch screens facilitate interaction with computer programs whereby a program displays items, or a virtual keyboard, on a screen and a user can interact with those items by pressing the screen directly, either with a finger or a stylus. Touch screens provide the benefit that the display is controlled by software and can therefore be adapted to indicate the interaction requirements of different programs. For example, where a virtual keyboard is displayed on a touch screen, the symbols displayed on each of the keys of the virtual keyboard can vary.

It is also known to project a virtual keyboard onto a table or other flat surface. A motion detector detects movement of fingers or a stylus relative to the projected virtual keyboard so as to detect which of the virtual keys is being selected by the user at a particular time. Because the keyboard is projected, the symbols displayed on each key can vary.

Both touch screens and projected keyboards suffer from the drawback that they provide little or no tactile feedback. Lack of tactile feedback makes it difficult for a user to know if they have pressed the correct key without looking at the keyboard or screen and generally reduces the efficiency of a user's interaction with a computer program.

In order to address the lack of tactile feedback provided by touch screens and projected keyboards, it has more recently become known to provide displays, such as light emitting diode displays, or liquid crystal displays, on individual keys of a keyboard to allow the symbols displayed by that keyboard to be altered by a user. Such devices have the advantage that tactile feedback is provided by the keys, making the keyboard easier to use than touch screens or projected keyboards, while at the same time allowing symbols displayed on the key to be dynamically varied.

It is an object of the present invention to provide a method for allowing a user to interact with a computer using appropriate input devices.

According to a first aspect of the present invention, there is provided a method for displaying a graphical user interface element to a user on a first display portion provided by a first display device and a second display portion provided by a second device. The method comprises displaying said graphical user interface element on said first display portion provided by said first display device; receiving user input indicating movement of said graphical user interface element from said first display portion to said second display portion, said user input comprising selection of said graphical user interface element on said first display portion and movement of said graphical user interface element to said second display portion; and displaying said graphical user interface element on said second display portion in response to said user input; wherein said second device is an input device comprising a plurality of independently physically actuable members, each of said plurality of independently physically actuable members comprising a respective display surface, and said second display portion is formed by said plurality of display surfaces.

The invention therefore provides a computer implemented method in which a user is able to select a graphical user interface element (for example an icon) which is displayed on the first display portion and move that graphical user interface element to the second display portion. The first and second display portions may form a single virtual display such that a user can use a pointing device (e.g. a mouse) to cause a cursor to move between the first display portion and the second display portion and thereby move the graphical user interface element between the first and second display portion.

The method may further comprise receiving user input indicating movement of said graphical user interface element from said second display portion to said first display portion, said user input comprising selection of said graphical user interface element on said second display portion and movement of said graphical user interface element to said first display portion. In this way bi-directional movement of the user interface between the first and second display portions can be achieved.

The second device may comprise a plurality of second devices which together provide the second display portion. The second device may be a keyboard, and the plurality of physically actuable members may be keys.

The first display device may take any convenient form, and may be a monitor such as an LCD monitor. The first display device may comprise a plurality of first display devices which together provide said first display portion.

Alternatively each of said display surfaces may adapted to display projected data. Such data may be projected onto said display surfaces by a projector external to the second device or a projector provided as an integral part of the second device. In either case data to be projected may be provided by a computer configured to carry out the method.

The second display portion may comprise a plurality of discrete display areas, each discrete display area being defined by a single one of said plurality of display surfaces, wherein said user interface element is displayed on said second display portion in a single one of said display areas. That is, the user interface element may be displayed on a display surface associated with a single one of said physically actuable members so as to associate a function associated with said user interface element with said physically actuable member.

Said user input may identify a position on said second display portion, and one of said display areas may selected based upon said position. For example, a display area which is closest to the position may be selected for display of the graphical user element.

The method may further comprise receiving input indicating actuation of one of said plurality of physically actuable members; determining a position in said second display portion associated with said actuated physically actuable member; generating selection data indicating user selection of said position; and processing said selection data. The selection data may take the form of a simulated mouse "click" such that the action which would be taken in response to a mouse "click" at that position is caused to occur.

The user interface element may have an associated function and processing said selection data may comprise determining a user interface element associated with said position. Processing said selection data may comprise activating said function associated with the determined user interface element.

The user interface element may have an associated function and the method may further comprise receiving input indicating actuation of one of said plurality of physically actuable members; generating an identification code associated with said actuated physically actuable member; determining a user interface element associated with said identification code; and activating said function associated with the determined user interface element.

In response to said user input, data associating said user interface element with an identification code associated with one of said physically actuable members may be stored. When said one of said physically actuable members is subsequently actuated, a look up operation may be carried out using said identification code so as to determine a selected user interface element and consequently a function which is to be carried out in response to the actuation.

The second device further comprises at least one further display surface associated with a portion of said input device other than one of said plurality of physically actuable members. For example, where the second device is a keyboard, the further display surface may be formed by a part of the second device which surrounds the physically actuable members or is adjacent to the physically actuable members.

The plurality of display surfaces may together form a contiguous display surface defining said second display portion. In this way a single image may be displayed using the second display portion by displaying different parts of the image on different ones of the plurality of display surfaces.

A further aspect of the invention provides an input device comprising a plurality of physically actuable members, wherein the input device provides a display portion, a first part of said display portion is defined by surfaces of said physically actuable members, and a second part of said display portion is defined by portions of said input device other than said physically actuable members.

In this way a display portion is provided by display surfaces provided both by physically actuable members and parts of the input device other than the physically actuable members such as surrounding surfaces.

The input device may be a keyboard and the plurality of physically actuable members may comprise a plurality of keys.

The device may further comprise a projector arranged to project an image on to each of said display surfaces.

Each of said display surfaces may comprise a display element. For example, each of said display surfaces may comprise a liquid crystal display element, a light emitting diode display element or an organic light emitting diode display element.

Each of said display surfaces may be provided by a respective display device.

The input device may be configured to receive a contiguous image and display said contiguous image using said plurality of display surfaces. For example the input device may be arranged to process the contiguous image so as to provide different parts of the image to different ones of the display surfaces to provide a user with a contiguous image in accordance with received data. Alternatively, the input device may be arranged to receive a plurality of discrete images which when displayed on the display surfaces form a single contiguous image.

A further aspect of the present invention provides a keyboard including an imaging system and associated software where the keyboard has a plurality of physically actuating keys, some or all of which have no fixed legend instead being dynamically configurable in legend and function, where a plurality of the keys and some or all of the remaining surface portion of the keyboard together form a first visual display surface, and that first visual display in turn forms part of a larger virtual display in conjunction with at least one other display device, such that the cursor of a pointing device (and associated functionality) moves seamlessly across and between the constituent displays of the virtual display.

It will be appreciated that embodiments of the invention can be implemented in any convenient form. For example aspects of the invention can be implemented by suitable computer programs. Aspects of the invention may provide carrier media and computer readable media carrying such computer programs. Further aspects of the invention may provide apparatus arranged to carry out the methods described herein. Such apparatus may take the form of a general purpose computer system comprising a memory storing processor readable instructions and a processor arranged to read and execute those instructions, the instructions comprising instructions controlling the processor to carry out methods described herein.

Embodiments of the present invention will now be described, by way of example, with reference to the accompanying drawings, in which:
Figures 1 to 3 are schematic illustrations of an embodiment of the invention; and
Figure 4 is a flowchart showing processing carried out by a computer in the embodiment of the invention shown in Figures 1 to 3.

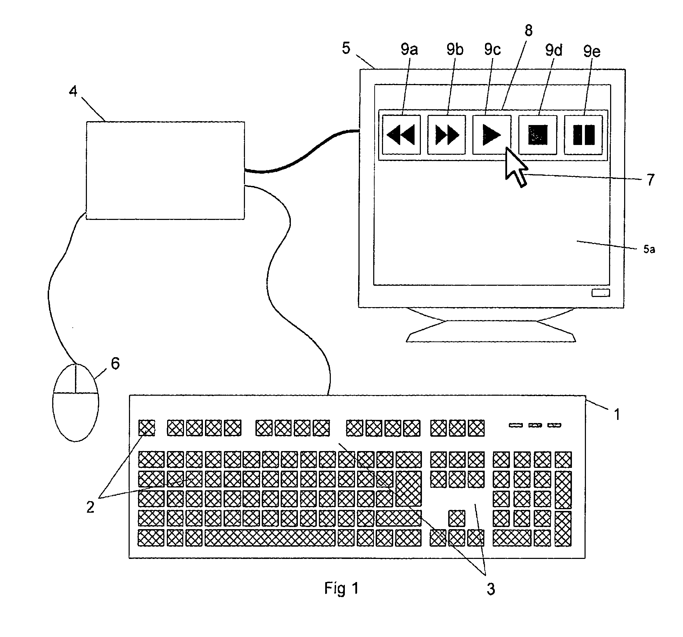

Figure 1 shows an embodiment of the present invention in which a keyboard 1 has a plurality of keys 2 (shaded in Figure 1), and a surface 3 comprised of the areas of the keyboard 1 between and around the keys 2. The keyboard 1 is connected to a computer 4 having support for a plurality of display devices. Support for the plurality of display devices may be provided in any appropriate way, and may be provided by a plurality of video graphics cards each having a video output connection, or a single video graphics card provided with a plurality of discrete video output connections.

A monitor 5 is connected to a first video output of the computer 4 such that the monitor provides a first display portion 5a to display data output from the computer 4. The computer 4 is further connected to a mouse 6 allowing a user to interact with the computer 4 using a cursor 7. More specifically, movement of the mouse 6 causes movement of the cursor 7 in the first display portion 5a, as is conventional in the art.

The keyboard 1 is adapted to provide a second display portion to display output from the computer 4. The second display portion defines an area having a plurality of locations, each location being identifiable by a respective pair of coordinates. Each of the keys 2 is associated with at least one of the plurality of locations. The keyboard 1 is connected to the computer 4 in such a way as to allow user input provided via the keyboard 1 to be received by the computer 4, and to allow images generated by the computer 4 to be displayed on the second display portion. Details of such connections are presented in further detail below.

In some embodiments of the present invention, the second display portion is provided by a surface formed by the keys 2 and the surface 3, by for example, projecting an image onto the keys 2 and the surface 3. For example, a display may be projected onto the keys 2 and the surface 3 from a projector connected to a second video output connection of the computer 4. Such a projector may be positioned above the keyboard 1 and may be separate from the keyboard 1, for example mounted to a ceiling above the keyboard 1. Alternatively, a suitable projector may be mounted to a casing of the keyboard 1 and positioned to project a display onto the keys 2 and the surface 3. As a further example, a display may be projected onto the keyboard 1 using rear projection methods to project a display from a projector positioned beneath the keyboard 1 such that the projected display is visible on the surface formed by the keys 2 and the surface 3.

Alternatively, each of the keys 2 and the various parts of the surface 3 may be provided with one or more display devices, such as liquid crystal display (LCD) light emitting diode (LED) or organic light emitting diode (OLED) display devices, connected to a second video output of the computer 4. Where each of the keys 2 and the surface 3 are provided with individual display devices, the individual display devices are adapted to provide the second display portion by operating together as a single, contiguous display portion. That is, the computer 4 is arranged to provide information to the keyboard 1 for display in the second display portion such that the information is displayed using the display devices provided on each of the keys 2 and the surface 3. That is, the computer 4 provides information to the keyboard 1 in such a way as to provide different parts of that information to different ones of the display devices provided by the keys 2 and the surface 3, such that the display devices together form a single display which makes up the second display portion. The computer 4 therefore processes information which is to be displayed, and provides different parts of the information to the display devices provided by different ones of the keys 2 so as to achieve display of the desired image in the second display portion. Alternatively, the computer 4 may provide the information to be displayed to the keyboard 2, and the keyboard 2 may be arranged to process the received information so as to display different parts of that information on the different display devices.

In alternative embodiments of the present invention, the second display portion is formed only from the keys 2. For example, in some embodiments, only the keys 2 are provided with display devices, and the surface 3 need not be provided with display devices. It will be appreciated that in such embodiments, where there are gaps between the keys 2 there will be gaps in the second display portion. That said, it will also be appreciated that the display devices provided by the keys 2 can still function as a single display portion by the computer 4 providing information to the keyboard 1 in the manner described above.

The first display portion provided by the monitor 5 and the second display portion provided by the keyboard 1 are adapted to operate as a single virtual display portion using methods known to those skilled in the art. Many modern operating systems, such as the Windows operating system from Microsoft Corporation and the Mac OSX operating system from Apple Inc provide support for multi-display operation. In this way the first display portion and the second display portion cooperate to form a larger single virtual display, and a user can interact with the computer using the single virtual display by, for example, moving the cursor 7 from the first display portion 5a provided by the monitor 5 to the second display portion provided by the keyboard 1 using the mouse 6. Movement of the cursor 7 between the first display portion 5a and the second display portion provided by the keyboard 1 may be seamless in the sense that the user can simply move the mouse so as to cause the cursor to pass beyond a lower edge of the first display portion 5a, at which point the cursor would reappear at an edge of the second display portion which is closest to the lower edge of the first display portion 5a. It will be appreciated that movement from the cursor from the second display portion 5a can similarly be realized.

Graphical user interface elements (such as windows, icons, toolbars etc) displayed on one display portion (e.g. the first display portion 5a provided by the monitor 5) may be 'dragged' and 'dropped' onto the other display portion (e.g. the second display portion provided by the keyboard 1) using the mouse 6.

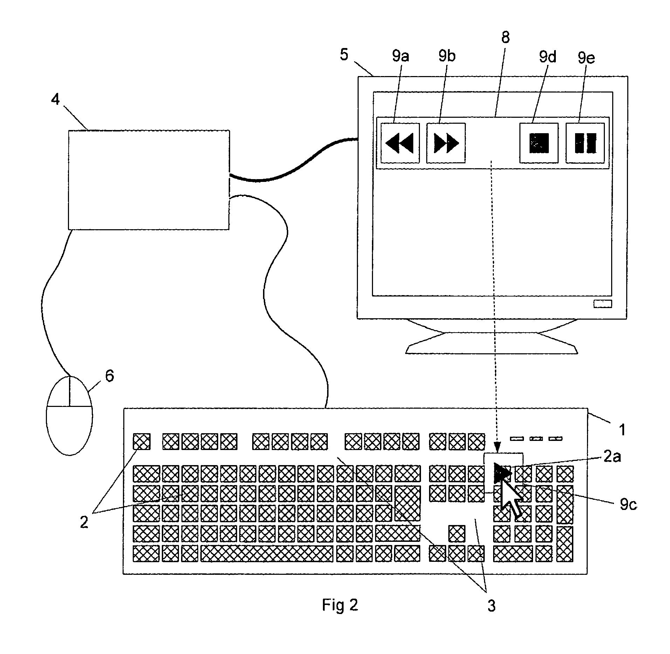

Referring to Figure 1 it can be seen that a toolbar 8 comprising a plurality of icons 9a to 9e is displayed on the first display portion 5a. Referring now to Figure 2 it can be seen that the icon 9c from the toolbar 8 has been dragged from the first display portion 5a to the second display portion provided by the keyboard 1 and positioned over a key 2a.

In one embodiment of the present invention actuation of one of the keys 2 generates a respective unique code. Software running on the computer 4 maintains a lookup table associating each unique code with a location in the second display portion, such that each unique code is associated with locations in the second display portion associated with the key 2 which generates that unique code. It will be appreciated that such a lookup table need only be generated once for a particular keyboard, based upon the layout of keys on that keyboard relative to positions on the second display portion provided by the keyboard 1.

Assuming that a lookup table of the type described above is maintained, when a user actuates, for example, the key 2a, the software running on the computer 4 registers the unique code generated by the actuation and determines the associated location in the lookup table referred to above. The software then generates data indicating a user selection at the associated location in the second display portion occupied by the key 2a. Such a user selection may be indicated by simulating a 'mouse click' at the relevant position in the second display portion. Given that the computer 4 stores data indicating what is displayed at each location of the second display portion, it will be appreciated that where the icon 9c has an associated function, for example to launch or control an application, the associated function will be performed by the computer 4 upon actuation of the key 2a by generation of the data indicating a user selection.

It will be appreciated that the above-described embodiment relies upon a user positioning graphical user interface elements in such a way that graphical user interface elements such as icons, which have associated functionality, are displayed on keys 2 on the keyboard 1. In alternative embodiments of the present invention, the software running on the computer 4 running on the computer 4 may operate to automatically map graphical user interface elements, or the functionality provided by those graphical user interface elements to keys 2 upon a user dropping a graphical user interface element onto any part of the second display portion, not necessarily keys of the keyboard 1.

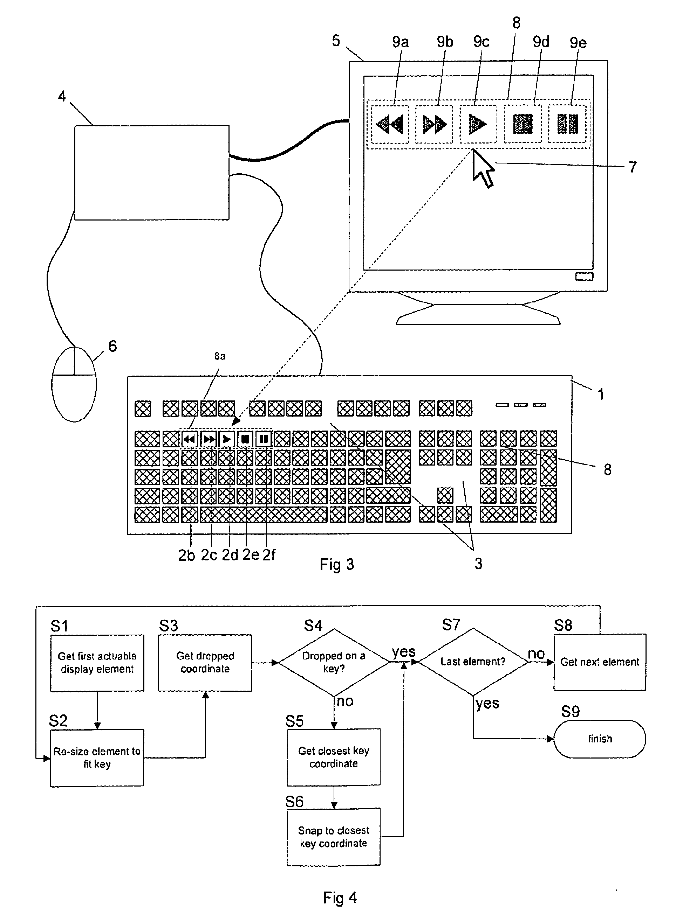

For example, in some embodiments of the present invention, the software running on the computer 4 monitors the graphical user interface elements dragged onto the second display portion to determine which parts of a dragged graphical user interface element have associated actuable functionality (e.g. icons, toolbars etc). The software running on the computer 4 then automatically maps those graphical user interface elements having associated actuable functionality to keys 2 on the keyboard 1. An example of such mapping is shown in Figure 3.

Referring to Figure 3, the entire toolbar 8 is dragged onto the second display portion and positioned in an area 8a. Software running on the computer 4 identifies the graphical user interface elements having associated functionality (i.e. the icons 9a to 9e) and 'snaps' each of the identified graphical user interface elements to a respective nearest one of the keys 2 (the keys 2b to 2f in the example of Figure 3) relative to a position where the relevant graphical user interface element is positioned by a user.

Figure 4 illustrates an example of processing that may be carried out by the software running on the computer 4 to snap graphical user interface elements to keys 2.

At step S1 a first actuable graphical user interface element is selected from one or more graphical user interface elements dropped onto the second display portion. At step S2 the selected actuable graphical user interface element is re-sized such that it may be displayed on a single one of the keys 2. Processing then passes to step S3 at which the position in the second display portion where the actuable graphical user interface element was dropped by the user is determined. Processing then passes to step S4 where it is determined if the position of the dropped actuable graphical user interface element corresponds with a position of one of the keys 2. If it is determined that the position of the actuable graphical user interface element does not correspond with a position of one of the keys 2, processing passes to step S5 and the position of one of the keys 2 nearest to the actuable graphical user interface element is determined. Processing then passes to step S6 and the graphical user interface element is moved such that it is displayed at the position of the identified nearest key 2. Processing then passes to step S7 at which it is determined if the current graphical user interface element is the last actuable graphical user interface element in the one or more graphical user interface elements to be dragged onto the second display portion. If it is determined that the current graphical user interface element is not the last graphical user interface element, processing passes to step S8 and a next actuable graphical user interface element is selected, before processing then passes back to step S2. Otherwise, processing passes from step S7 to step S9 and ends.

If, on the other hand, it is determined at step S4 that the position of the selected actuable graphical user interface element does correspond with position of one of the keys 2, processing passes from step S4 to step S7.

It will be appreciated that alternatively, graphical user interface elements could be snapped to keys 2 as a user drags the graphical user interface elements around the second display portion, such that the user can see on which physically actuable element 2 each graphical user interface element will be displayed before placing the graphical user interface element.

Where a graphical user interface element dragged from the first display portion 5a to the second display portion cannot be actuated by the key 2 onto which that graphical user interface element has been dragged, software running on the computer 4 may operate to warn the user, or to disallow the display item to be dragged to that position in the second display portion. For example, a user may attempt to drag a volume control slider graphical user interface element onto a depressible key 2. In such a case, the software running on the computer 4 may cause the dragged graphical user interface element to slide back to the first display portion.

Alternatively, the graphical user interface elements may be remapped into a different format suitable for actuation by one or more of the keys 2. For example, a volume slider dragged onto the second display portion may be remapped by the software running on the computer 4 into a volume increase symbol and a volume decrease symbol displayed over two of the keys 2.

Graphical user interface elements dragged from the first display portion onto the second display portion may be moved around the second display portion and may be dragged back onto the first display portion 5a.

It will be appreciated that the computer 4 can control operation of the keyboard 1 in any convenient way. For example an application programmer's interface (API) may be provided on the computer 4, and this interface may be used by computer programs running on the computer 4 to control operation of the keyboard 1.

While the keyboard 1 and mouse 6 are shown as having wired connections to the computer 4, it will be appreciated that the keyboard 1 and mouse 6 are, in some embodiments, wirelessly connected to the computer 4.

While the above description has been concerned with a computer keyboard having depressible keys, it will be appreciated that the present invention may be implemented on any input device having physically actuable input members, such as depressible keys, sliders, switches and dials etc. For example, the present invention may be implemented on a mixing desk, wherein the controls of the mixing desk (usually sliders, switches and dials) can be dynamically reassigned. Other example applications include gaming controls and financial trading system controls.

## Claims

**1.** An input device comprising a plurality of physically actuable members, wherein the input device provides a display portion arranged to display a contiguous image, a first part of said display portion is defined by surfaces of said physically actuable members, and a second part of said display portion is defined by portions of said input device other than said physically actuable members.

**2.** An input device according to claim 1, wherein the input device is a keyboard and said plurality of physically actuable members comprises a plurality of keys.

**3.** An input device according to claim 1 or 2, further comprising a projector arranged to project an image onto each part of said display portion.

**4.** An input device according to claim 1 or 2, wherein each part of said display portion is provided by one or more display devices.

**5.** An input device according to claim 4, wherein each of said display devices is a liquid crystal display element, a light emitting diode display element or an organic light emitting diode display element

**5.** An input device according to any preceding claim, configured to receive a contiguous image and display said contiguous image using each part of said display portion.

**6.** An input device according to any preceding claim, wherein said contiguous image comprises a plurality of user interface elements.

**7.** An input device according to claim 6, wherein at least some of said user interface elements are displayed on respective surfaces of said physically actuable members.

**8.** An input device according to claim 7, wherein each user interface element has an associated function, and a function associated with a particular user interface element is activated in response to actuation of a physically actuable member having a surface on which the particular user interface element is displayed.

**9.** A method for displaying a contiguous image using an input device comprising a plurality of physically actuable members, wherein the input device provides a display portion arranged to display the contiguous image, a first part of said display portion being defined by surfaces of said physically actuable members, and a second part of said display portion being defined by portions of said input device other than said physically actuable members, the method comprising:
displaying a first part of said contiguous image on said first part of said display portion; and
displaying a second part of said contiguous image on said second part of said display portion.

**10.** A method according to claim 9, wherein said contiguous image comprises a plurality of user interface elements, each having an associated function and the method further comprises:
receiving user input indicating actuation of one of said plurality of physically actuable members;
generating an identification code associated with said actuated physically actuable member;
determining a user interface element associated with said identification code;
and
activating said function associated with the determined user interface element.

**11.** A method according to claim 10, further comprising, in response to said user input, storing data associating said user interface element with an identification code associated with one of said physically actuable members.

**12.** A carrier medium carrying a computer program comprising computer readable instructions arranged to cause a computer to carry out the method of any one of claims 9 to 11.
